(19) Europäisches Patentamt
European Patent Office
Office européen des brevets

(11) **EP 4 685 272 A2**

(12) **DEMANDE DE BREVET EUROPEEN**

(43) Date de publication:
**28.01.2026 Bulletin 2026/05**

(21) Numéro de dépôt: **25180605.5**

(22) Date de dépôt: **03.06.2025**

(51) Classification Internationale des Brevets (IPC):
**C25B 9/60** *(2021.01)* **C25B 11/02** *(2021.01)*
**C25C 1/12** *(2006.01)* **H01M 8/18** *(2006.01)*
**C25B 1/50** *(2021.01)* **C25B 9/13** *(2021.01)*
**C25B 9/15** *(2021.01)* **C25B 9/19** *(2021.01)*
**C25C 7/04** *(2006.01)* **C25B 1/04** *(2021.01)*
**C25B 15/08** *(2006.01)*

(52) Classification Coopérative des Brevets (CPC):
**H01M 8/18; C25B 1/04; C25B 1/50; C25B 9/13;
C25B 9/15; C25B 9/19; C25B 9/60; C25C 1/12;
C25C 7/04;** C25B 1/23; C25B 3/03; C25B 3/26;
C25B 15/08

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **06.06.2024 FR 2405950**

(71) Demandeur: **Cocoon Technologies
75012 Paris (FR)**

(72) Inventeur: **Poulain, Raphaël
Paris (FR)**

(54) **CELLULE DE PRODUCTION D HYDROGÈNE CYLINDRIQUE**

(57) L'invention se rapporte à une Cellule électrochimique (CEC) comprenant une première électrode (A0) de forme cylindrique et une deuxième électrode (C1) de forme cylindrique, la première électrode (A0) et la deuxième électrode (C1) partageant un même axe de révolution, le diamètre de la première électrode étant supérieur au diamètre de la deuxième électrode, de sorte que le volume (V) défini entre la face interne de la première électrode et la face externe de la deuxième électrode puisse recevoir un électrolyte, la cellule (CEC) comprenant des moyens d'obturation (D2, D3, CFo) de la base supérieure et de la base inférieure de la cellule assurant l'étanchéité de l'électrolyte, la cellule (CEC) comprenant de plus des moyens de production d'un champ magnétique (B), ledit champ magnétique étant perpendiculaire au champ électrique produit entre la première électrode (A0) et la deuxième électrode (C1).

[Fig. 1]

FIG. 1

EP 4 685 272 A2

## Description

Domaine

La présente divulgation se rapporte au domaine des cellules électrochimiques. La présente divulgation se rapporte plus particulièrement au domaine des cellules électrochimiques notamment destinées à l'électrolyse dans le cadre de la production d'hydrogène gazeux.

## Art antérieur

L'hydrogène est un élément essentiel qui, bien qu'il soit relativement peu courant sous sa forme moléculaire dans la nature, est un composant fondamental de nombreux éléments tels que l'eau, les déchets organiques, les hydrocarbures, et bien d'autres encore. Pour produire de l'hydrogène, il est nécessaire de décomposer ces molécules, un processus qui peut être réalisé par diverses méthodes, notamment électrolytique, thermochimique, photo-électrolytique et biochimique.

L'une de ces méthodes est l'électrolyse, un procédé qui convertit l'énergie électrique en énergie de décomposition moléculaire grâce à une réaction d'oxydo-réduction. Cette séparation est rendue possible par une cellule électrochimique composée d'une anode, d'une cathode et d'un électrolyte, une substance qui conduit les ions. À l'anode, une réaction d'oxydation se produit, permettant de récupérer de l'oxygène. Simultanément, à la cathode, une réaction de réduction se produit, permettant de récupérer de l'hydrogène.

Dans le cadre de la production d'hydrogène vert (c'est-à-dire d'hydrogène dont le bilan carbone est faible, comparé aux solutions de production industrielles), les cellules alcalines sont les plus économiques et les plus résistantes. Cependant, elles présentent un inconvénient majeur : un faible courant par unité de surface. Cela est dû au fait que les réactions sont limitées par des phénomènes entre les phases gaz/liquide aux électrodes et par la diffusion des ions hydroxyde à l'anode, ainsi que par une faible efficacité de conversion.

De plus, il est nécessaire de développer des cellules électrochimiques pour la production de l'hydrogène s'appuyant sur la compression électrochimique isotherme pour produire directement l'hydrogène à haute pression, sans ou en limitant l'assistance de compression complémentaire.

La divulgation se propose d'améliorer la situation.

## Résumé de l'invention

Ainsi, il est proposé une cellule électrochimique notamment adaptée à l'électrolyse de l'eau en milieu alcalin.

Plus particulièrement, la divulgation se rapporte à une cellule électrochimique comprenant une première électrode de forme cylindrique et une deuxième électrode de forme cylindrique, la première électrode et la deuxième électrode partageant un même axe de révolution, le diamètre de la première électrode étant supérieur au diamètre de la deuxième électrode, de sorte que le volume défini entre la face interne de la première électrode et la face externe de la deuxième électrode puisse recevoir un électrolyte, la cellule comprenant des moyens d'obturation de la base supérieure et de la base inférieure de la cellule assurant l'étanchéité de l'électrolyte, la cellule comprenant de plus des moyens de production d'un champ magnétique, ledit champ magnétique étant perpendiculaire au champ électrique produit entre la première électrode et la deuxième électrode.

Selon une caractéristique particulière, la première électrode est une anode et la deuxième électrode est une cathode.

Selon une caractéristique particulière, l'électrolyte destiné à être reçu au sein du volume défini entre la face interne de la première électrode et la face interne de la deuxième électrode est une solution aqueuse d'hydroxyde de potassium.

Selon une caractéristique particulière, les moyens de production d'un champ magnétique sont positionnés au voisinage de la face extérieure d'au moins un des deux moyens d'obturation.

Selon une caractéristique particulière, les moyens de production d'un champ magnétique sont des aimants permanents de forme torique

Selon une caractéristique particulière, les moyens de production d'un champ magnétique sont des électro-aimants et/ou une bobine alimentée avec un courant électrique.

Selon une caractéristique particulière, la cellule électrochimique comprend en outre une membrane de diffusion d'ions hydroxydes de forme cylindrique, dont l'axe de révolution est identique à celui de la première électrode, la membrane cylindrique étant située entre la première électrode et la deuxième électrode.

Selon une caractéristique particulière, la cellule électrochimique comprend des moyens d'injection de l'eau, sous une forme liquide, à une pression et à une température prédéterminée, au sein du volume d'électrolyse.

Selon une caractéristique particulière, les moyens d'injection de l'eau se présentent au moins partiellement sous la forme d'un cylindre prenant place au sein d'un volume laissé libre dans la deuxième électrode.

Selon un autre aspect, la divulgation se rapporte également à un système comprenant :

- des moyens de production d'un courant électrique, ces moyens de production appartenant au groupe comprenant : panneau photovoltaïque, éolienne, centrale hydroélectrique, centrale nucléaire ;
- au moins une cellule électrochimique telle que décrite précédemment, ladite cellule électrochimique étant alimentée par lesdits moyens de production d'un courant électrique, l'électrolyte étant une solution aqueuse d'hydroxyde de potassium ;
- au moins un réservoir de stockage, ledit réservoir étant connecté à une ouverture pratiquée au sein de ladite au moins une cellule électrochimique, ledit réservoir étant destiné à recevoir du dihydrogène produit par ladite au moins une cellule électrochimique lorsque celle-ci est alimentée par les moyens de production de courant électrique.

De plus, dans d'autres aspects, la cellule objet de la présente peut être mise en œuvre pour la capture et la réduction du CO2, les batteries RedOx flow et le recyclage des métaux par électro-dépôt.

**Brève description des figures**

D'autres caractéristiques et avantages de la divulgation apparaîtront plus clairement à la lecture de la description suivante d'un mode de réalisation particulier, donné à titre de simple exemple illustratif et non limitatif, et des dessins annexés, parmi lesquels :

- [Fig.1] illustre une vue de coupe verticale simplifiée d'une cellule électrochimique selon la divulgation ;
- [Fig.2a] [Fig.2b] [Fig.2c] [Fig.2d] représentent une vue simplifiée en trois dimensions d'une cellule électrochimique selon la divulgation ;
- [Fig.3] illustre les champs électrique et magnétiques au sein d'une vue de coupe verticale simplifiée d'une cellule ;
- [Fig.4] illustre une vue de coupe verticale d'une autre cellule, dans un exemple de réalisation, comprenant un cylindre de renforcement ;
- [Fig.5] illustre le potentiel en fonction de la densité de courant de la cellule, dans une configuration avec et sans ajout de champ magnétique,
- [Fig.6] illustre une vue de coupe horizontale de l'anode dans un exemple de réalisation de celle-ci.

Description d'un mode de réalisation

La divulgation se rapporte à une cellule d'électrolyse magnétoélectrochimique. Cette cellule présente l'avantage d'améliorer grandement les phénomènes de diffusion aux interfaces via les forces de Lorentz et de Kelvin, ainsi que d'améliorer les réactions soit par hyperthermie (champs magnétique inductif) ou les transferts de charge (magnetocourant). Par ailleurs, selon la divulgation, la cellule est cylindrique. L'architecture cylindrique permet également de travailler à de plus hautes températures et a de plus hautes pressions que les cellules classiques. La cellule magnetoélectrochimique selon la divulgation peut également être utilisée pour d'autres applications électrochimiques : réduction du CO2, batteries RedOx flow, recyclage de métaux.

Ainsi, en fonction des configurations matérielles, il est possible de mettre en œuvre une cellule magnetoélectrochimique fonctionnant à des températures élevées allant de 80 à 300°C et à des pressions élevées (idéalement de l'ordre de 10 à environ 700 bar en fonction de l'enveloppe - par exemple le cylindre de renforcement - utilisée) qui permet d'atteindre un point de fonctionnement améliorant l'efficacité de conversion, le bilan énergétique ainsi que le bilan économique par rapport aux solutions actuellement disponibles. Cela permet de stocker directement l'hydrogène à haute pression (en fonction de l'enveloppe sélectionnée pour ce faire) sans être assisté par un compresseur mécanique gourmand en énergie, ou en limitant cette utilisation. Cependant, même en deçà de ces valeurs de températures et de pressions, la densité de courant maximale de la cellule de la divulgation est améliorée.

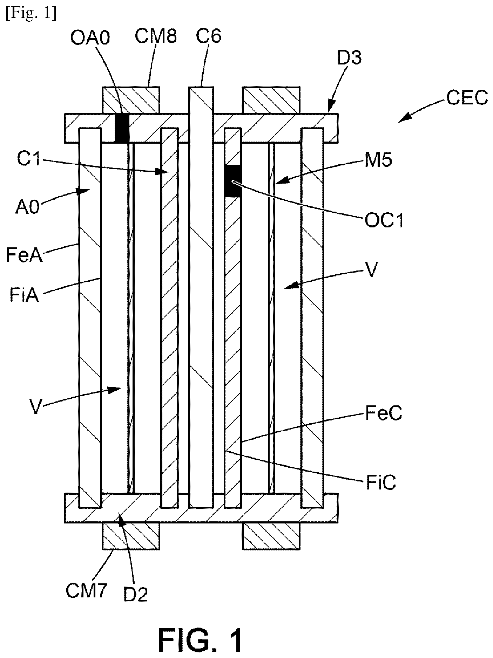

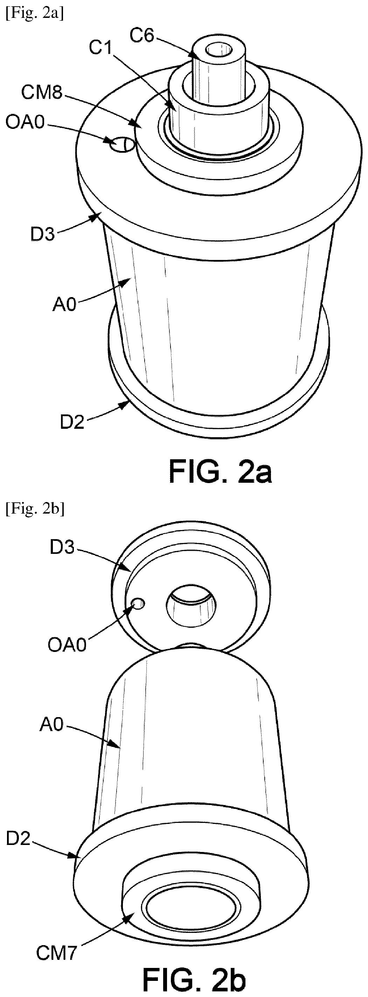

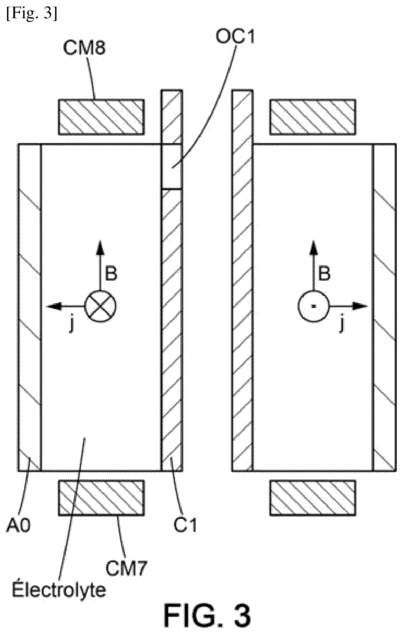

On présente, en relation avec les figures 1, 2a à 2d et 3, une cellule électrochimique selon la présente divulgation. La [Fig.1] est une vue de coupe simplifiée d'une cellule électrochimique tandis que les figures 2a à 2d illustre une cellule en trois dimensions. La [Fig.3] est une vue de coupe simplifiée. On notera que les figures ne sont pas à l'échelle et qu'elles ont été établies pour des besoins de clarté des propos.

Selon la divulgation, la cellule électrochimique se présente sous une forme cylindrique. Un cylindre est un objet géométrique tridimensionnel qui a deux bases circulaires parallèles et congruentes, reliées par une surface courbe. Les deux bases sont appelées les "cercles de base" et la distance entre elles est appelée la "hauteur" du cylindre. La surface courbe qui relie les deux cercles de base est appelée la "surface latérale" du cylindre. La hauteur et le diamètre du cylindre sont de l'ordre du centimètre. Par exemple la hauteur peut être compris entre 2 et 20 cm et le diamètre peut être compris entre 2 et 10 cm. Les dimensions du cylindre sont adaptées pour être compatible avec la génération et la pénétration du champ magnétique utilisé. Un exemple de réalisation est décrit ci-après.

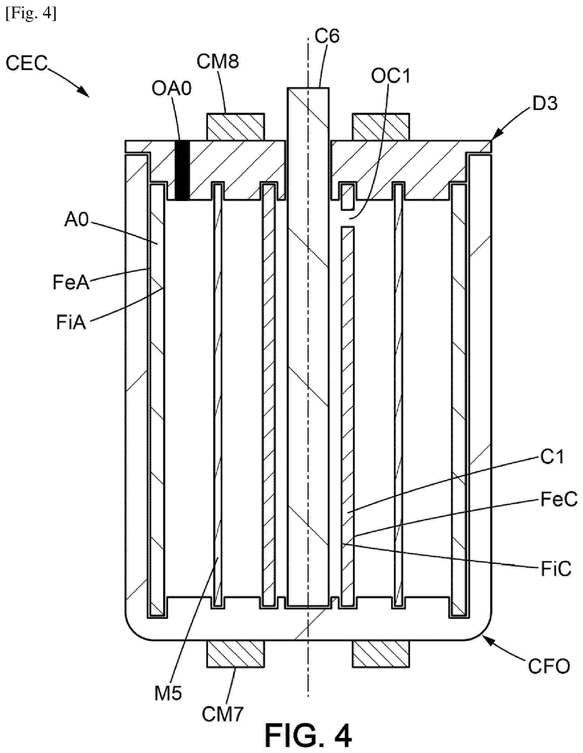

D'une manière générale, cette cellule comprend une anode A0, de forme cylindrique, disposée en bordure extérieure du cylindre cette anode comprend une face interne FiA et une face externe FeA. L'épaisseur de la paroi de l'anode est de l'ordre du millimètre et peut être par exemple de 0.1 mm à 10 mm et doit être adapté en fonction des contraintes mécaniques au sein du cylindre notamment en termes de pression générée. En fonction des réalisations, la face externe FeA de l'anode peut constituer la surface latérale externe de la cellule CEC. Dans d'autres réalisations, par exemple lorsque la pression exercée à l'intérieure de la cellule augmente, un cylindre de renforcement CFo peut être utilisé. Auquel cas, l'anode A0 est insérée dans le cylindre de renforcement CFo. Le matériau et l'épaisseur du cylindre de renforcement sont de l'ordre du millimètre et sont adaptés afin de pouvoir résister aux pressions envisagées lors de la mise en œuvre de la cellule. Le cylindre CFo peut par exemple être majoritairement en verre ou en métal ou en matériau composite et peut, dans certaines réalisations, être conçu pour permettre de conduire le courant électrique vers l'anode. Par ailleurs, une membrane, par exemple en matériau compressible, peut être présente entre l'anode A0 et la cylindre de renforcement CFo. Dans l'exemple des figues 1 et 2, le cylindre de renforcement n'est pas représenté. Le cylindre de renforcement CFo est représenté en [Fig.4]. Un tel cylindre de renforcement CFo peut être constitué, dans un exemple de réalisation, d'une enveloppe (métallique ou en polymère), qui est protégée par une seconde enveloppe de contention des forces de pression par exemple en matériaux composites renforcés grâce à un enroulement de filaments de carbone. Enfin une couche dans un matériau thermiquement isolant peut être envisagé afin de conserver la cellule électrochimique à une température désirée.

Selon la divulgation, la cathode C1 se présente également sous une forme cylindrique et comprend une face interne FiC et une face externe FeC. L'épaisseur de la paroi de la cathode C1 est de l'ordre du millimètre et peut être incluse entre 0.1 mm à 10 mm. Cette cathode C1 est positionnée de sorte que son axe de révolution concorde sensiblement avec l'axe de révolution de l'anode A0. En d'autres termes, les deux axes de révolution sont sensiblement confondus et la cathode C1 est positionnée sensiblement au centre du cylindre de l'anode A0. La cathode C1 peut adopter d'autres formes ayant un axe de révolution concordant avec l'axe de révolution de l'anode A0.

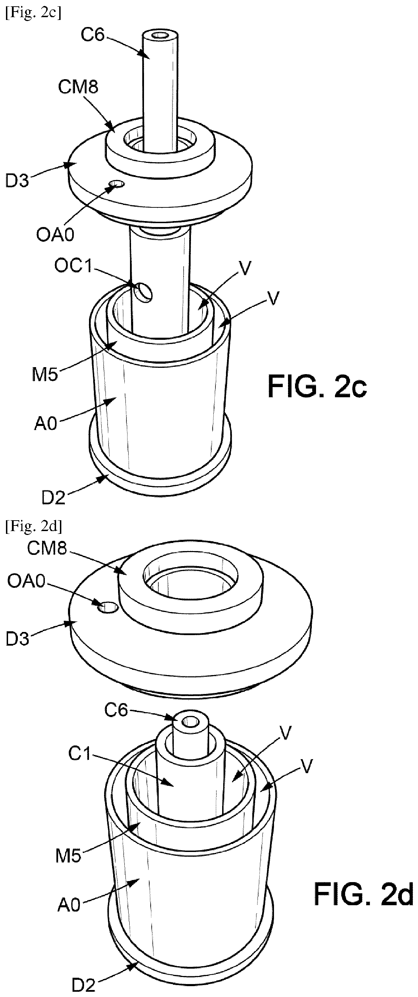

Comme exemplifié en [Fig.1] et en [Fig.2a] à [Fig.2d], une base de l'anode A0 et une base de la cathode C1 sont solidarisées à un socle nommé ici disque inférieur D2. Par exemple, le disque D2 peut posséder des dégagements de matière ou/et des rainures : une rainure pour la base de l'anode et une rainure pour la base de la cathode (les rainures ne sont pas numérotées sur les schémas). La taille des rainures est de l'ordre du millimètre et notamment aux épaisseurs des anodes et des cathodes. Plus particulièrement, la largeur de la rainure recevant l'anode cylindrique est sensiblement égale à l'épaisseur de l'anode. La largeur de la rainure recevant la cathode cylindrique est sensiblement égale à l'épaisseur de la cathode. Des moyens de fixation et/ou d'étanchéité supplémentaires peuvent être présents en fonction des besoins. Par exemple, des joints peuvent être ajoutés aux extrémités des cylindres ainsi que des systèmes de maintien des disques permettant le maintien mécanique lors de la mise en compression des gaz durant les réactions électrochimiques. Dans d'autres exemples de réalisation, le cylindre de renforcement CFo peut comprendre un fond circulaire, plat, rainuré, comme exposé en [Fig.4] (en remplacement du disque D2 par exemple), l'anode et la cathode sont placées dans leurs rainures respectives, dont les largeurs correspondent à leurs épaisseurs. Des moyens d'isolation et de d'étanchéité peuvent également être prévus selon les cas. Dans la structure de la [Fig.4], le disque D2 peut également être présent, auquel cas, le cylindre de renforcement possède un fond permettant d'accueillir ce cylindre D2.

Selon la divulgation, la cellule comprend également un couvercle nommé ici disque supérieur D3, ce disque supérieur D3 comprenant également des moyens de solidarisation de l'anode A0 et de la cathode C1. Ces moyens peuvent également se présenter sous la forme de rainures (comme pour le disque inférieur D2) ou d'autres moyens de fixation adaptés en fonction des besoins. Le disque D3 doit être conçu de sorte qu'il puisse permettre la collection des gaz générés aux électrodes. Des moyens d'étanchéité peuvent également compléter les moyens de fixation si cela s'avère nécessaire. Lorsqu'un cylindre de renforcement CFo est présent, comme exposé à la [Fig.4], ce cylindre de fixation peut comprendre les moyens nécessaires à la solidarisation du disque supérieur D3 par exemple sous la forme d'un taraudage complémentaire d'une vis sur le disque supérieur D3 de sorte que le disque supérieur D3 puisse être vissé sur le cylindre de renforcement tout en assurant l'étanchéité de l'ensemble. Ou bien un ensemble de vis disposées le long du périmètre du cylindre de renforcement Cfo et traversant le disque supérieur D3. Ce système de vis est également transposable aux exemples des figures 1 et 2.

Le disque supérieur D3 est percé d'un orifice OA0 situé à proximité de l'anode A0. Cet orifice est utilisé pour permettre l'évacuation du dioxygène produit lors de l'électrolyse. Cet orifice est bien entendu connecté à un moyen d'évacuation (et/ ou de stockage) de cet oxygène par exemple sous la forme d'une valve permettant de maintenir la pression au sein de la cellule, d'une pompe d'aspiration et un tuyau dont le diamètre est de l'ordre du millimètre (0.1 mm à 5 mm) et est conformé, si nécessaire, pour soutenir la pression exercé par les gaz. La cathode C1 quant à elle peut comprendre et dans sa partie supérieure, un orifice Oc1 d'évacuation du dihydrogène produit lors de l'électrolyse. Dans un autre exemple de réalisation le dihydrogène peut également être évacué à l'aide d'un orifice adéquat pratiqué dans le disque supérieur D3. Cette possibilité n'est pas représentée sur les figures 1 à 4. L'orifice pratiqué dans la cathode sert à l'évacuation du dihydrogène qui remonte le long de la paroi interne de la cathode C1. Des moyens spécifiques de récupération de ce dihydrogène sont connectés à cette partie supérieure de la cathode C1 et/ou du disque supérieur D3. Ces moyens ne sont pas représentés sur les figures 1 à 4.

Dans des exemples de réalisation, tels que présentés aux figures 2a à 2D, la cathode C1 peut dépasser de la cellule électrochimique définis par les disques D1 et D3 et l'anode A1 pour pouvoir être électriquement connectée à l'extérieur et pour convoyer le dihydrogène sous pression vers un système tiers. Une valve et un système de déshumidification peut être intégré dans la cathode entre l'orifice OC1 et l'extérieur pour un premier traitement du dihydrogène produit.

Entre l'anode et la cathode, une membrane de séparation M5 est également mise en œuvre. Cette membrane de séparation M5 prend également la forme d'un cylindre. Cette membrane sert à séparer les gaz produits aux électrodes afin qu'ils ne se recombinent pas tout en permettant la diffusion des ions hydroxydes. Les matériaux constitutifs de cette membrane sont des oxydes, des polymères ou bien un matériau composite oxyde-polymère. Le type de matériaux retenu dépend essentiellement des conditions de fonctionnement de la cellule. Pour des températures proches de 80°C, la membrane peut être une membrane échangeuse d'anion en poly(fluorénylarylpipéridinium) (PFAP) ou bien un diaphragme du type Zirfon©. À plus haute température, la membrane peut être un diaphragme fritté poreux à base de matériaux résistant. L'épaisseur de la membrane est de l'ordre de millimètre et plus raisonnablement elle est comprise entre 0.05 mm et 2 mm. Lorsque la membrane est souple, elle peut être maintenue à l'aide d'éléments porteurs rigide. Ces éléments ne sont pas représentés sur les figures.

La distance entre la face interne de l'anode (FiA) et la face externe de la cathode (FeC) est optimisée de sorte que les pertes ohmiques dues aux déplacements des ions au sein de la cellule restent relativement faibles. Par exemple une distance de 3 à 10 mm serait raisonnable. Les pertes ohmiques sont converties en chaleur par effet Joule et sont utiles pour le maintien en température de la cellule et pour la réduction des pertes par activation électrochimique aux électrodes.

Par ailleurs, dans certaines réalisations, le disque supérieur D3 peut comprendre des moyens de connections électrique avec l'anode et/ou la (par exemple sous la forme d'orifices pratiqués à cet effet, ou par d'autre moyens). Ces moyens permettent dans ce cas d'alimenter la cellule en courant électrique.

Comme explicité précédemment l'objectif de la cellule selon la divulgation est de permettre une production d'hydrogène en continu à des pressions et des températures élevées en maximisant les effets positifs produits par cette hausse des températures et cette hausse de pression. Dans l'objectif d'alimenter en continu la cellule avec de l'eau déminéralisée une arrivée d'eau en continu est également prévue pour apporter l'eau nécessaire à l'hydrolyse au fur et à mesure de la consommation de cette eau et de la transformation de celle-ci en dihydrogène et en dioxygène.

À cet effet dans un exemple de réalisation tel que celui illustré aux figures 1 à 4 une arrivée d'eau est également prévue au centre de la cathode. Cette arrivée d'eau est pratiquée dans cet exemple de réalisation à l'aide d'un cylindre C6 qui vient se placer au centre de la cathode C1 dont l'axe de révolution est identique à l'axe de révolution de la cathode. Le cylindre C6 est fabriqué dans un matériau conformé pour résister aux conditions de fonctionnement de la cellule et est utilisé pour pouvoir introduire l'eau au sein de la cellule cette eau est injectée en bas de la cellule soit au niveau du disque inférieur D2 à l'aide d'un ou de plusieurs orifices pratiqués à cet effet, par exemple dans la cathode et/ou dans la membrane séparatrice M5 (orifices non représentés) ou encore par l'intermédiaire de d'évidements longitudinaux pratiqués dans le disque D2. D'autres agencements sont également envisageables en fonction des contraintes de mise en œuvre opérationnelles. De préférence l'eau est injectée à une pression déterminée à l'avance et la température de cette eau est également adaptée aux conditions de mise en œuvre. L'eau injectée dans la cellule est sélectionnée pour convenir aux standards nécessaires pour ne pas contaminer la cellule et est par exemple préalablement déminéralisée. La température d'injection est comprise entre 0 et 300°C à un débit compensant la consommation de la cellule en eau.

Les orifices pratiqués dans le disque supérieur sont évidemment munis de valves, filtres et/ou d'autres moyens de compensation de la pression de sorte à limiter ou annuler la possibilité d'évacuation intempestive de l'eau, de l'oxygène ou de l'hydrogène à partir de la cellule.

Enfin, selon la divulgation, des moyens de génération d'un champ magnétique CM7, CM8 sont également insérés sur (ou au sein de) cette cellule de production de dihydrogène. Ces moyens de génération peuvent se présenter sous la forme d'aimants toriques. Ils peuvent également prendre la forme d'électro-aimants. Quels que soient les moyens employés, un champ magnétique est créé perpendiculairement au courant qui circule entre l'anode et la cathode. En fonction des réalisations, ces moyens de génération d'un champ magnétique CM7, CM8 sont positionnés de sorte à être le plus proche possible de l'électrolyte. Ainsi, ces moyens peuvent être intégrés au sein même des disques inférieurs et supérieurs et/ou du cylindre de renforcement selon les cas de figure. La [Fig.3] illustre les orientations des champs électriques et magnétiques mis en œuvre dans une version très schématisée de l'intérieur d'une cellule de la divulgation en présence d'un électrolyte. Le champ magnétique est de préférence uniforme et est perpendiculaire au courant. Le champ magnétique n'adopte pas nécessairement une direction donnée.

La forme cylindrique de la cellule est préférée comme étant adaptée à une mise sous pression plus importante, cette forme permettant l'atteinte de pressions de fonctionnement interne plus élevées que les cellules classiques tout en assurant une homogénéité thermique.

La justification théorique de la cellule d'électrolyse objet de la présente divulgation est la suivante.

Les électrolyseurs alcalins reposent sur le craquage électrochimique des molécules d'eau ($H_2O$) en milieu alcalin (KOH environ 20-40 % en masse) pour produire de l'hydrogène ($H_2$) et de l'oxygène ($O_2$). Les étapes de craquages électrochimiques étant tout d'abord la génération de $H_2$ et d'ions hydroxydes ($OH^-$) à la cathode selon la réaction d'évolution de l'hydrogène (HER) :

$$2H_2O + 2e^- \rightarrow H_2 + 2OH^- \qquad (1)$$

Les ions hydroxydes diffusent ensuite à l'anode pour être oxydés en $O_2$ selon la réaction d'évolution de l'oxygène (OER) :

$$2OH^- \rightarrow \tfrac{1}{2}O_2 + H_2O + 2e^- \quad (2)$$

La réaction totale étant donc :

$$H_2O \rightarrow \tfrac{1}{2}O_2 + H_2 \quad (3)$$

La réaction cathodique dans l'équation 1 n'est pas limitante comme la réaction implique l'eau qui est le solvant de l'électrolyte (concentration $\infty$). Cependant la réaction anodique dans l'équation 2 est limitée par la diffusion des ions hydroxydes à l'interface de l'anode. La densité de courant limite ($j_0$) de la réaction dans l'équation 2 peut être déterminée selon l'équation dérivée des lois de Fick :

$$j_0 = nFD_{OH^-} * \frac{c_0}{L} \quad (4)$$

Dans laquelle : n est le nombre d'électrons par nombre de $OH^-$ consommées, $c_0$ étant de 4 à 9 M/L, L étant l'épaisseur de la couche de diffusion qui est de l'ordre de 0.5 mm dans un système sans convection, $D_{OH^-}=10^{-9}$ $m^2/s$ le coefficient de diffusion. Le courant limite $j_0$ dans un électrolyseur alcalin est donc de seulement 0,1 à 0,5 A/cm2 contre presque 6-7 A/cm2 pour son concurrent direct de type PEM.

Par ailleurs, la production des bulles aux interfaces des électrodes due à la génération des gaz tend à réduire les performances des électrolyseurs.

Une méthode pour augmenter le courant limite est de réduire la valeur L de la couche de diffusion par de la convection forcée. De plus la convection forcée tend à faciliter le décollage des bulles se formant aux électrodes. La mise en œuvre de la cellule telle que présentée précédemment a pour principale conséquence de générer de la convection forcée afin de réduire la couche de diffusion à l'anode et de décoller les bulles par l'introduction d'un champ magnétique.

Il est cependant important de noter que les vitesses des réactions HER et OER dépendent des catalyseurs, de la température et de la pression. Les catalyseurs et la température tendent à accélérer les réactions et de diminuer le potentiel d'activation quand la pression provoque l'effet inverse. Par ailleurs, une asymétrie doit être considérée entre la HER et OER, avec la HER étant plus rapide et plus électro-intense que la OER, ainsi que la prise en compte des faiblesses de durabilité de l'anode pour l'OER. Pour ces raisons, il est judicieux d'avoir une anode pour l'OER avec une surface active plus importante que la cathode pour la HER, comme cela est le cas de la cellule cylindrique de la présente divulgation.

La combinaison d'un champ magnétique au courant ionique dans la cellule électrochimique permet de générer un déplacement de l'électrolyte (fluide) selon l'équation de Lorentz :

$$\vec{F} = \vec{j} \ \vec{B} \,(5)$$

Avec j le courant résultant des réactions électrochimiques et B le champ magnétique. Par ailleurs, la force de Kelvin pourraient s'exercer sur les molécules d'eau dans le cas de la présence d'un gradient du champ magnétique. Les espèces paramagnétiques sont attirées vers les densités de champ magnétique plus élevées selon l'équation :

$$F_K = \left(\frac{1}{2}\mu_0\right)cx_m\nabla B^2 \ (6)$$

Ou $F_K$ est la force de Kelvin, $\mu_0$ est la constante magnétique ($4\pi$x $10^{-7}$ TmA$^{-1}$), « c » est la concentration en espèce magnétique en mol/m-3, $x_m$, est la susceptibilité molaire et $\nabla$ est le gradient du champ magnétique. Le champ magnétique améliore en sus les réactions de l'OER (équation 2).

La compression magnétique consiste à comprimer les gaz produits aux électrodes par l'accumulation de ces gaz dans un volume constant. La compression des gaz se déroulent à température constante d'où le terme "isotherme". Le surpotentiel aux électrodes lors de la compression isotherme peut être dérivée de l'équation de Nernst :

$$\Delta V = \frac{RT}{nF}ln\left(\frac{P_2}{P_1}\right)$$

Dans le cas d'une compression isotherme de 1 à 700 bar, le surpotentiel aux électrodes serait seulement de l'ordre de 100 mV, ce qui est négligeable en comparaison des systèmes mécaniques de compression de gaz. Ceci justifie l'intérêt présenté par la cellule de la divulgation qui peut fonctionner à haute pression (relativement à la pression ambiante).

La cellule telle que décrite précédemment a permis d'améliorer le courant limite (courant maximal), sans optimisation, c'est-à-dire sans augmentation significative de la pression ou de la température. Des tests différentiés ont été réalisés, notamment pour effectuer une comparaison avec et sans présence de moyen de génération de champ magnétique. La solution technique proposée dans les figures 1 à 3 a été testée avec une solution KOH de 30 % wt, avec l'anode (TaO2-IrO2-TiO2, de diamètre 48 mm) en position extérieure pour l'OER et la cathode (acier inoxydable 304, diamètre 17 mm) à 70-80°C pour la HER. La hauteur de l'anode et de la cathode est d'environ 2 cm. La membrane est une membrane en Zirfon©. Les moyens de génération du champ magnétique sont constitués d'aimants permanents de forme torique. La consommation électrique de la cellule est dans cette configuration est d'environ 180 w. Le volume d'hydrogène produit par cette configuration, est estimé à environ 0.6 à 1.2 mol d'hydrogène par heure avec une tension comprise entre 1.5 et 7 V et un courant compris entre 1 et 2 A/cm$^2$.

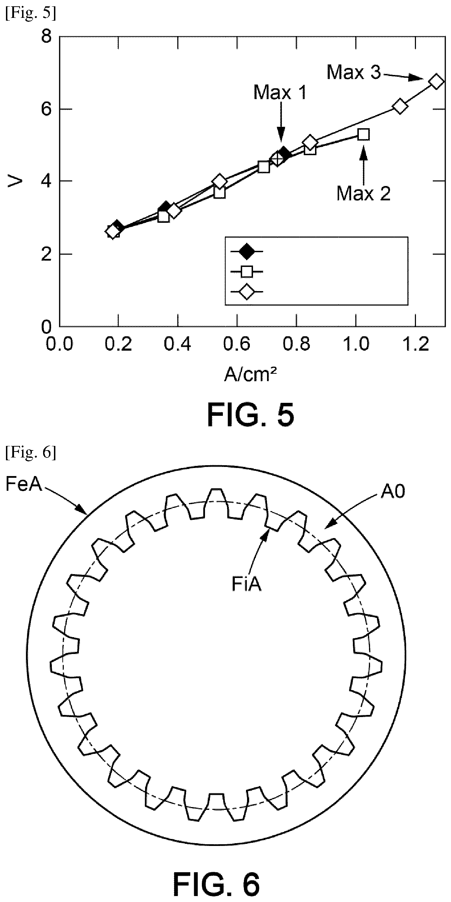

Les résultats de ces tests sont exposés en [Fig.5] illustre le potentiel en fonction de la densité de courant de l'électrolyseur cylindrique sans et avec différente intensité de champ magnétique. L'abscisse est la densité de courant, l'ordonnée est le voltage. Trois essais sont présentés : sans champ magnétique, avec un seul champ magnétique produit sur le disque D3 (supérieur) et avec deux champs magnétiques (un au-dessus et un en dessous). Max 1 illustre la valeur maximale du courant sans champs magnétique, Max2 illustre la valeur maximale du courant avec un seul champ magnétique et max 3 illustre la valeur maximale du courant avec deux champs magnétiques. Une amélioration du courant limite de 0,5-0,7 A/cm$^2$ à 1,2-1,5 A/cm$^2$ à 70-80 degrés Celsius et à une pression de seulement 1 bar est démontrée, ce qui représente une augmentation de près de 100%. On note que la présence d'un seul champ magnétique suffit déjà à augmenter cette valeur.

En fonction des exemples de réalisation, il est possible de modifier la structure de la surface de la face interne de l'anode FiA. En effet, une des clés d'une réaction efficace réside dans la différence de surface entre l'anode et la cathode, l'anode devant avoir une surface plus importante que celle de la cathode. À cet effet, comme exposé en [Fig.6], la surface de la face interne de l'anode FiA possède par exemple une structure « dentée », du style de celle d'un engrenage droit à denture droite ou bien de la forme d'un pas de vis. La [Fig.6] présente une vue de coupe horizontale de l'anode. Cette structure dentée est présente sur l'intégralité ou la quasi-intégralité de la hauteur de l'anode (à l'exception par exemple des extrémités hautes et basses de l'anode qui sont insérées dans les rainures correspondantes). La structure proposée comprend un certain nombre de dents, d'une largeur (ld) et d'une hauteur (hd) prédéterminée. Cette structure permet d'augmenter de manière importante la surface de l'anode en contact avec l'électrolyte. En plus de la structure dentée, la face FiA peut présenter une structure tridimensionnelle avec des motifs répétitifs ordonnés ou désordonnés de l'ordre du millimètre.

De même la cathode C1 peut adopter différente architecture, la plus simple étant une barre ronde. La face externe de la cathode (FeC) peut être aussi dentée, ou en forme de pas de vis et structurée afin d'augmenter la surface de contact entre la cathode et l'électrolyte et aussi de permettre l'évacuation optimale du dihydrogène vers l'orifice OC1.

L'architecture des électrodes (A0) et (C1) peuvent enfin être optimisées pour favoriser la circulation de l'électrolyte mis en mouvement grâce aux forces de Lorentz, pour séparer les gaz produit de l'électrolyte et assurer la bonne injection de l'eau avec l'accès C6.

La cellule objet de la divulgation trouve un intérêt particulier dans le cadre de la mise en œuvre de la production d'hydrogène vert. En effet la configuration telle que proposée dans le cadre du prototype réalisé permet de déterminer que la puissance électrique nécessaire au fonctionnement de la cellule et compatible avec des puissances électriques qui peuvent être fournies par des dispositifs de production d'électricité de faible puissance tels que des panneaux photovoltaïques ou des éoliennes individuelles. De tels panneaux photovoltaïques peuvent être installés au sein d'environnement non contrôlés. Par exemple un local d'habitation peut être muni de tels panneaux photovoltaïques et d'une centrale de génération d'hydrogène vert agissant comme un vecteur de stockage d'électricité lorsque les panneaux produisent de l'électricité qui n'est pas utilisée dans le local d'habitation. Ce vecteur de stockage de l'électricité peut ensuite être utilisé pour produire de l'électricité lorsque les panneaux photovoltaïques ne fournissent plus l'électricité nécessaire à l'alimentation du local d'habitation. L'avantage principal dès lors réside dans le fait qu'un système qui comprend une pluralité de panneaux photovoltaïques ou d'autres moyens de génération d'électricité verte, peut être connecté à une ou plusieurs cellules pour générer de l'hydrogène lequel est stocké au sein d'une cuve adaptée à cet effet. Cet hydrogène est ensuite utilisé en tant que réserve pour la production d'électricité pour le local d'habitation. L'utilisation de la cellule a une pression élevée garantit qu'il n'est pas nécessaire ou en tout cas pas indispensable d'utiliser des moyens de compression de l'hydrogène pour pouvoir le stocker. L'hydrogène stocké est ensuite utilisé en conjonction par exemple avec une pile à combustible (ou d'autres moyens adaptés) pour pouvoir produire l'électricité nécessaire au local d'habitation. Ce local d'habitation n'est donc pas nécessairement raccordé à un réseau de production d'électricité.

De plus, dans au moins un exemple de réalisation, il est possible d'utiliser l'électricité verte produite par les panneaux photovoltaïques ou par les éoliennes pour générer l'électricité nécessaire à la génération du champ magnétique par le biais d'électro-aimants ou de bobines. Dès lors la présence des aimants permanents n'est plus nécessaire, réduisant ainsi le coût de fabrication de la cellule.

De plus dans le cas où la cellule et mise en œuvre tel que présenté à la [Fig.4] c'est-à-dire avec la présence d'un cylindre de renforcement, cette cellule peut faire l'objet d'une maintenance facilitée : il est en effet simple de dévisser le disque supérieur pour pouvoir retirer les éléments qui se trouvent à l'intérieur du cylindre et effectuer le nettoyage et le décrassage de ceux-ci en cas de besoin. La maintenance d'un tel dispositif est alors simple à mettre en œuvre, et adaptée à des situations dans lesquelles cette maintenance doit être réalisée par des personnels peu ou pas qualifiés.

Dans d'autres situations, la mise en œuvre de la solution décrite dans le cadre de la présente peut être effectuée dans des installations industrielles dédiées. Auquel cas les dimensions des cellules sont modifiées notamment pour leur permettre de produire des volumes supérieurs d'hydrogène. Les cellules peuvent être connectées en séries ou bien en parallèles pour générer une plus grande quantité de gaz. Notamment les valeurs des champs magnétiques générés ainsi que les valeurs de puissance électrique utilisée pour pouvoir produire l'hydrogène sont adaptées aux dimensions des cellules qui sont mises en œuvre. L'objectif étant un cadre de cette mise en œuvre de poursuivre de favoriser l'utilisation d'électricité d'origine non carbonée pour favoriser l'utilisation d'hydrogène vert.

Dans d'autres cas de figure, la cellule objet de la présente divulgation peut être utilisée pour la capture et la réduction du CO2, les batteries RedOx flow et le recyclage des métaux par électro-dépôt. À titre d'exemple d'utilisation alternative de la cellule objet de la divulgation, on peut citer les applications suivantes.

Pour la réduction du CO2 : Le volume V est rempli par un électrolyte formulé pour absorber le CO2 injecté par le tube C6. Par exemple une solution aqueuse d'hydroxyde, un liquide ionique ou bien un eutectique. Le CO2 absorbé dans l'électrolyte est décomposé sous l'action d'un potentiel aux électrodes en monoxyde de carbone (CO) ou méthane (CH4) à la cathode à l'intérieur et en oxygène (O2) à l'anode à l'extérieur. Le système est d'autant plus performant du fait de l'injection du CO2 à haute pression, avec la température et la mise en mouvement de l'électrolyte dans la cellule dû à la présence du champ magnétique.

Pour la production de métaux : Le volume V est rempli d'un sel métallique par exemple du CuCl2 en solution aqueuse (électrolyte). La cathode se trouve à l'extérieur de la cellule et l'anode à l'intérieur. Les ions métalliques sont réduits à l'anode sous forme de poudre (croissance dendritique) et les cations sont oxydés en gaz à l'anode. La solution de sel métallique est injectée à proximité de la cathode et la solution pauvre en ions métalliques est collectée à proximité de l'anode. Les réactions bénéficient de la mise en circulation de l'électrolyte dû à la présence du champ magnétique.

Pour le stockage de l'énergie dans un système de batterie « RedOx flow » : Le volume V est rempli par un anolyte, entre la membrane et l'anode, et d'un catholyte entre la membrane et la cathode. L'anolyte et la catholyte ne se mélangent pas mais les ions sont échangés au niveau de la membrane sous l'action d'un potentiel appliqué entre la cathode et l'anode. Les fluides sont mis en circulation grâce à la présence du champ magnétique et le système RedOx flow ne nécessite pas l'utilisation de pompes additionnelles.

**Revendications**

1. Cellule électrochimique (CEC) comprenant une première électrode (A0) de forme cylindrique et une deuxième électrode (C1) de forme cylindrique et une membrane électrochimique (M5) de forme cylindrique, la première électrode (A0) et la deuxième électrode (C1) et la membrane (M5) partageant un même axe de révolution, le diamètre de la première électrode étant supérieur au diamètre de la deuxième électrode, la cellule (CEC) comprenant des moyens d'obturation (D2, D3, CFo) de la base supérieure et de la base inférieure de la cellule assurant l'étanchéité de l'électrolyte, la cellule (CEC) comprenant de plus des moyens de production d'un champ magnétique (B), ledit champ magnétique étant perpendiculaire au champ électrique produit entre la première électrode (A0) et la deuxième électrode (C1).

2. Cellule électrochimique (CEC) selon la revendication 1, **caractérisée en ce que** la première électrode (A0) est l'électrode qui supporte la réaction électrochimique générant la plus faible densité de courant et la deuxième électrode (C1) supporte la réaction électrochimique générant la plus forte densité de courant pour un surpotentiel donné.

3. Cellule électrochimique (CEC) selon l'une des revendications 1 à 2, **caractérisée en ce que** l'électrolyte destiné à être reçu au sein du volume défini entre la face interne de la première électrode (A0) et la face externe de la deuxième électrode (C1) est formé d'ions.

4. Cellule électrochimique (CEC) selon l'une des revendications 1 à 3, **caractérisée en ce que** les moyens de production (CM7, CM8) d'un champ magnétique (B) sont positionnés au voisinage d'au moins un des deux moyens d'obturation (D2, D3, CFo).

5. Cellule électrochimique (CEC) selon l'une des revendications 1 à 4, **caractérisée en ce que** les moyens de production (CM7, CM8) d'un champ magnétique (B) sont des aimants permanents de forme torique.

6. Cellule électrochimique (CEC) selon l'une des revendications 1 à 4, **caractérisée en ce que** les moyens de production (M7, M8) d'un champ magnétique (B) sont des électro-aimants et/ou une bobine alimentée avec un courant électrique.

7. Cellule électrochimique (CEC) selon l'une des revendications 1 à 4, **caractérisée en ce que** les moyens de production d'un champ magnétique (B) est un solénoïde alimenté en courant et enroulé, en partie ou en totalité, autour de la partie extérieure de l'électrode (A0).

8. Cellule électrochimique (CEC) selon l'une des revendications 1 à 7, **caractérisée en ce qu'**elle comprend des moyens d'injection (C6) de l'eau, sous une forme liquide, à une pression et à une température prédéterminée, au sein du volume (V) d'électrolyse.

9. Cellule électrochimique (CEC) selon la revendication 8, **caractérisé en ce que** les moyens d'injection (C6) de l'eau se présentent au moins partiellement sous la forme d'un cylindre prenant place au sein d'un volume laissé libre dans la deuxième électrode (C1).

10. Système comprenant :

- des moyens de production d'un courant électrique décarbonné, ces moyens de production appartenant au groupe comprenant : panneau photovoltaïque, éolienne, centrale hydroélectrique, centrale nucléaire ;
- ou au moins une cellule électrochimique (CEC) selon l'une des revendications 1 à 9, ladite cellule électrochimique (CEC) étant alimentée par lesdits moyens de production d'un courant électrique ;
- ou au moins un réservoir de stockage, ledit réservoir étant connecté à une ouverture pratiquée au sein de ladite au moins une cellule électrochimique (CEC), ledit réservoir étant destiné à recevoir du dihydrogène produit par ladite au moins une cellule électrochimique (CEC) lorsque celle-ci est alimentée par les moyens de production de courant électrique.

11. Utilisation de la cellule électrochimique (CEC) selon l'une des revendications 1 à 2 et 4 à 6 pour la capture et la réduction du $CO_2$ ou le recyclage des métaux par électro-dépôt ou le stockage de l'énergie dans un système de batterie « RedOx flow ».

[Fig. 1]

FIG. 1

[Fig. 2a]

FIG. 2a

[Fig. 2b]

FIG. 2b

[Fig. 2c]

FIG. 2c

[Fig. 2d]

FIG. 2d

[Fig. 3]

FIG. 3

[Fig. 4]

FIG. 4

[Fig. 5]

FIG. 5

[Fig. 6]

FIG. 6